# FASCICULE DE BREVET EUROPEEN

(11) **EP 0 457 629 B1**
(45) Date de publication et mention de la délivrance du brevet: **15.02.1995**
(21) Numéro de dépôt: 91400830.5
(22) Date de dépôt: 27.03.1991
(51) Int. Cl.: H05B 6/64, B65D 81/34

(54) **Récipient pour produit à réchauffer ou à cuire dans un four tel qu'un four à micro-ondes, obturé par un opercule fixé par thermoscellage**
Durch Heissiegeln mit einer Folienabdeckung geschlossener Behälter für Produkte zum Aufwärmen bzw. Kochen in einem Ofen, z.B. einem Mikrowellenherd
Container for a product to be reheated or cooked in an oven such as a microwave oven, closed by a laminate attached by heatsealing

(30) Priorité: 28.03.1990 FR 9003958
(43) Date de publication de la demande: 21.11.1991
(73) Titulaire: SOCIETE ALSACIENNE D'ALUMINIUM Société Anonyme, F-74160 Saint Julien en Genevois (FR)
(72) Inventeur: Boehrer, Marianne, F-67600 Selestat (FR)
(74) Mandataire: Lemoine, Robert

(56) Documents cités:
- EP-A- 0 339 807
- FR-A- 2 171 705
- US-A- 3 674 134
- US-A- 4 785 937

## Description

La présente invention concerne un récipient pour produit à réchauffer ou à cuire dans un four tel qu'un four à micro-ondes, comportant un rebord périphérique sur lequel un opercule est fixé par thermoscellage. Un tel récipient est par exemple connu du document EP-A- 0 339 807.

Les opercules des récipients renfermant des produits alimentaires ou médicaux comportent en général une couche métallique destinée à les rendre parfaitement imperméables. Cette couche métallique doit toutefois être enlevée avant l'introduction des récipients dans un four à micro-ondes car elle s'oppose au passage des micro-ondes et favorise la formation d'un arc électrique.

US-A-4 785 937 décrit un sachet renfermant un produit destiné à être réchauffé dans un four à micro-ondes, et dont les parois latérales comprennent une couche d'aluminium reliée de manière séparable à une couche en matière synthétique adjacente par une couche d'adhésif.

Or comme la couche d'adhésif est appliquée sur toute la surface de la couche d'aluminium, l'utilisateur est contraint d'exercer une force importante pour enlever par pelage la couche d'aluminium.

La présente invention se propose d'apporter une solution à ce problème et, pour ce faire, elle a pour objet un récipient qui se caractérise en ce que son opercule comprend un sous-ensemble supérieur comportant une couche métallique et un sous-ensemble inférieur comportant une couche supérieure réactivable à chaud apposée initialement de manière non adhérente contre la couche métallique et une couche inférieure thermoscellable scellée contre le rebord périphérique, la couche réactivable à chaud et la couche thermoscellable étant des couches en matière synthétique, en ce que la couche métallique est séparable par pelage de la couche réactivable à chaud tandis que la couche thermoscellable est séparable par pelage, du rebord périphérique, et en ce qu'une partie périphérique de la couche réactivable à chaud, située à l'aplomb du rebord périphérique adhère, par suite de sa réactivation due à son chauffage lors du scellage de la couche thermoscellable sur le rebord périphérique, à la couche métallique.

Le sous-ensemble supérieur de cet opercule peut être facilement séparé de la couche réactivable à chaud puisque sa liaison par adhérence avec celle-ci est limitée à sa partie située à l'aplomb du rebord périphérique du récipient.

Avantageusement, la couche réactivable à chaud présente vis à vis de la couche métallique une adhérence inférieure à l'adhérence de la couche thermoscellable vis à vis du rebord périphérique.

Les risques pour que la couche thermoscellable se sépare accidentellement du rebord périphérique du récipient lors de l'enlèvement du sous-ensemble supérieur sont ainsi évités.

L'épaisseur de l'opercule est de préférence choisie en fonction des dimensions du récipient. Par exemple, pour un récipient de la dimension d'un pot de yaourt, la couche réactivable à chaud et la couche thermoscellable peuvent être appliquées l'une contre l'autre de manière inséparable. En revanche, pour un récipient dont les dimensions sont nettement supérieures, la couche réactivable à chaud et la couche thermoscellable peuvent être situées de part et d'autre d'au moins une couche intermédiaire dont elles sont inséparables.

Selon un mode de réalisation particulier de l'invention, les sous-ensembles supérieur et inférieur comportent chacun une languette d'ouverture s'étendant au-delà du rebord périphérique, les deux languettes étant superposées mais n'adhérant pas l'une avec l'autre.

Il convient ainsi d'exercer une traction, d'abord sur la languette supérieure pour enlever le sous-ensemble supérieur juste avant d'introduire le récipient dans un four à micro-ondes, puis sur la languette inférieure pour enlever le sous-ensemble inférieur et ouvrir le récipient après réchauffage ou cuisson.

Selon un autre mode de réalisation, les sous-ensembles supérieur et inférieur comportent chacun deux languettes d'ouverture ayant chacune une racine sensiblement au niveau du bord libre du rebord périphérique, les languettes du sous-ensemble supérieur adhérant aux languettes du sous-ensemble inférieur tandis que l'une de ces dernières est fragilisée au niveau de sa racine.

Il est recommandé dans ce cas d'apposer sur la face supérieure de l'opercule, sur la languette du sous-ensemble supérieur qui recouvre la languette fragilisée, une indication invitant l'utilisateur à exercer en premier une force de traction sur ces deux languettes, afin qu'il enlève la couche métallique avant de placer le récipient dans un four à micro-ondes. Sous l'action de cette force, la languette fragilisée se séparera aisément du sous-ensemble inférieur mais restera solidaire de la languette du sous-ensemble supérieur qui la recouvre pendant l'enlèvement de celui-ci.

L'utilisateur devra exercer en second une traction sur la languette restante pour enlever le sous-ensemble inférieur et ouvrir le récipient après réchauffage ou cuisson.

Lorsque le récipient comprend un renfoncement latéral, il est souhaitable que les sous-ensembles supérieur et inférieur s'avancent au-dessus du renfoncement latéral et comportent chacun une languette d'ouverture ayant une racine sensiblement au niveau du bord libre du rebord périphérique, les deux languettes étant distantes du renfoncement latéral et adhérant l'une avec l'autre, la languette du sous-ensemble inférieur étant en outre fragilisée au niveau de sa racine.

Il convient ici encore d'apposer sur la face supérieure de l'opercule, sur les languettes, une indication invitant l'utilisateur à exercer en premier une force de traction sur ces dernières pour enlever le sous-ensemble supérieur avant d'introduire le récipient dans un four à micro-ondes.

Comme la partie du sous-ensemble inférieur qui surplombe le renfoncement latéral constitue une sorte de languette, l'utilisateur exercera en second instinctivement une force de traction sur cette partie pour ouvrir le récipient après réchauffage ou cuisson.

Lorsque le rebord périphérique du récipient présente une saillie externe délimitée par une ligne de fragilisation, il est souhaitable que les sous-ensembles supérieur et inférieur comportent chacun deux languettes d'ouverture ayant chacune une racine sensiblement au niveau du bord libre du rebord périphérique, que les languettes du sous-ensemble supérieur adhérent aux languettes du sous-ensemble inférieur, que la saillie externe soit recouverte par deux des languettes adhérant l'une à l'autre, et que la languette du sous-ensemble inférieur reposant sur la saillie externe soit fragilisée au niveau de sa racine.

Il est là encore recommandé d'apposer sur la face supérieure de l'opercule, sur la languette du sous-ensemble supérieur qui surplombe la saillie externe, une indication invitant l'utilisateur à briser en premier cette saillie et à exercer une traction sur les languettes correspondantes pour enlever le sous-ensemble supérieur.

L'utilisateur exercera en second instinctivement une traction sur la languette restante pour ouvrir le récipient après réchauffage ou cuisson.

Lorsque le rebord périphérique présente deux saillies externes délimitées chacune par une ligne de fragilisation, il est souhaitable que les sous-ensembles supérieur et inférieur comportent chacun deux languettes d'ouverture ayant chacune une racine sensiblement au niveau du bord libre du rebord périphérique, que les languettes du sous-ensemble inférieur recouvrent les saillies externes et adhérent aux languettes du sous-ensemble supérieur, et que l'une des languettes du sous-ensemble inférieur soit fragilisée au niveau de sa racine.

Il convient toujours de préciser sur l'opercule l'endroit à partir duquel l'utilisateur doit enlever le sous-ensemble supérieur avant d'introduire le récipient dans un four à micro-ondes.

Dans la mesure où le récipient possède de grandes dimensions, la couche métallique peut avantageusement être revêtue extérieurement d'au moins une couche de renforcement, cette couche permettant de rigidifier l'opercule et de le rendre plus résistant, notamment pour qu'il puisse supporter une opération de stérilisation.

D'autres caractéristiques et avantages de la présente invention ressortiront de la description de plusieurs modes de réalisation, qui sera donnée ci-après à titre d'exemple nullement limitatif en référence aux dessins annexés dans lesquels :
- la figure 1 est une vue en coupe schématique d'un récipient selon un premier mode de réalisation ;
- la figure 2 est une vue de dessus du récipient visible sur la figure 1 ;
- la figure 3 est une vue en coupe schématique d'un récipient selon un second mode de réalisation ;
- la figure 4 est une vue de dessus du récipient visible sur la figure 3 ;
- la figure 5 est une vue en coupe schématique d'un récipient selon un troisième mode de réalisation ;
- la figure 6 est une vue de dessus du récipient visible sur la figure 5 ;
- la figure 7 est une vue en coupe schématique d'un récipient selon un quatrième mode de réalisation, le rebord de ce récipient pouvant comporter une seconde saillie externe, laquelle est représentée en traits mixtes ;
- la figure 8 est une vue de dessus du récipient visible sur la figure 7 ;
- la figure 9 est un schéma illustrant un procédé de fabrication d'un stratifié en bande à partir duquel pourront être obtenus les opercules représentés sur les figures 1 et 7 ; et
- les figures 10 à 12 sont des schémas illustrant trois étapes d'un procédé de fabrication d'un stratifié en bande à partir duquel pourront être obtenus d'autres opercules.

Les récipients selon l'invention ont été mis au point pour recevoir des produits de longue conservation, par exemple des produits alimentaires, destinés à être réchauffés ou cuits dans un four à micro-ondes. Ces récipients comportent d'une manière connue en soi un rebord périphérique 1 entourant l'entrée de leur cavité et sont fermés de manière étanche par un opercule 2 fixé par thermoscellage sur leur rebord périphérique. Ils sont en général réalisés en matière synthétique, mais ils pourraient éventuellement être réalisés en métal à condition que la face supérieure de leur rebord périphérique 1 soit revêtue d'un film de matière synthétique autorisant le thermoscellage de leur opercule 2.

D'une manière générale, l'opercule des récipients selon l'invention comprend un sous-ensemble supérieur I comportant une couche métallique 3 et un sous-ensemble inférieur II comportant une couche supérieure réactivable à chaud 4 appliquée contre la couche métallique 3 et une couche inférieure thermoscellable 5 scellée contre le rebord périphérique 1.

La couche réactivable à chaud 4 et la couche thermoscellable 5 sont réalisées en matière synthétique. Par ailleurs, la couche métallique 3 et la couche thermoscellable 5 sont séparables par pelage, respectivement de la couche réactivable à chaud 4 et du rebord périphérique 1.

Par ailleurs, la couche réactivable à chaud 4 possède, à l'aplomb du rebord périphérique 1, une partie périphérique 6 réactivée, c'est-à-dire adhérant à la couche métallique 3, par suite de son chauffage lors du scellage de la couche thermoscellable 5 sur le rebord périphérique.

La fixation d'un opercule 2 sur le rebord périphérique d'un récipient est réalisée en appliquant un outil de thermoscellage classique sur la partie de l'opercule qui surplombe ledit rebord périphérique.

Sous l'effet de la chaleur qu'il dégage pendant son fonctionnement, cet outil active la partie 6 de la couche réactivable à chaud 4 qui s'étend sous lui et permet ainsi à cette partie d'adhérer à la couche métallique 3 en réalisant une liaison étanche. Il permet en outre de fixer de manière étanche la couche thermoscellable 5 sur le rebord 1 en réalisant une fusion de la partie 7 située entre ces deux éléments.

On notera à toutes fins utiles ici que l'outil de thermoscellage provoque une légère déformation de la partie de l'opercule qui surplombe le rebord 1 et laisse apparaître une empreinte annulaire 8 légèrement en creux.

On notera encore que lorsqu'un opercule 2 est scellé sur un récipient, la couche réactivable à chaud 4 présente vis à vis de la couche métallique 3 une adhérence inférieure à l'adhérence de la couche thermoscellable 5 vis à vis du rebord 1.

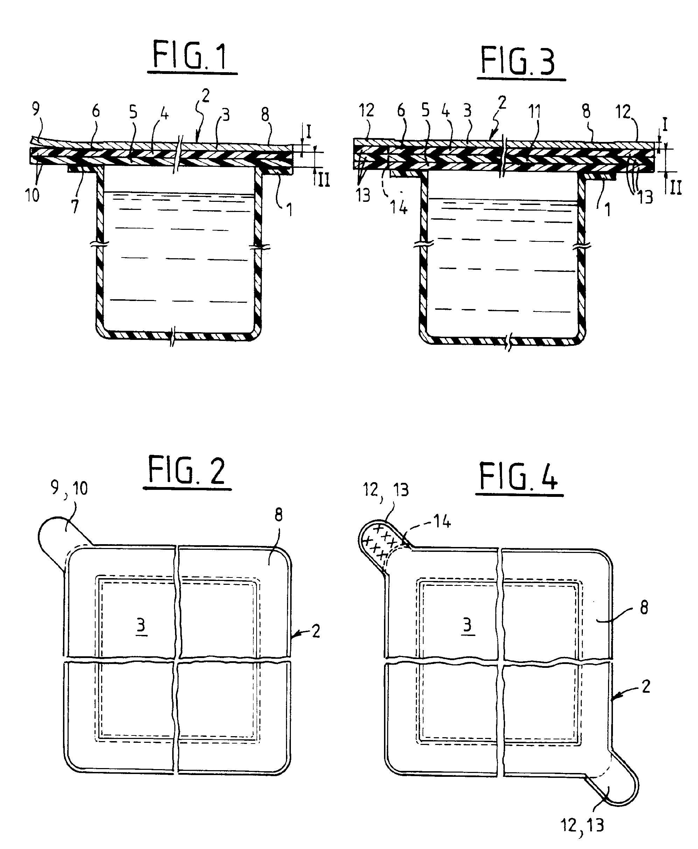

Dans le mode de réalisation représenté sur les figures 1 et 2, la couche réactivable à chaud 4 et la couche thermoscellable 5 sont appliquées l'une contre l'autre de manière inséparable.

Par ailleurs, les sous-ensembles supérieur I et inférieur II comportent des languettes d'ouverture 9,10 s'étendant au-delà du rebord 1, ces languettes étant superposées mais n'adhérant pas l'une avec l'autre car étant situées hors de l'empreinte annulaire 8 de l'outil de thermoscellage.

Avant d'introduire le récipient dans un four à micro-ondes, l'utilisateur pourra facilement séparer la couche métallique 3 du reste de l'opercule puisqu'il lui suffira d'exercer une traction sur la languette 9.

Dans le mode de réalisation représenté sur les figures 3 et 4, la couche réactivable à chaud 4 et la couche thermoscellable 5 du sous-ensemble inférieur II sont situées de part et d'autre d'une couche intermédiaire 11 dont elles sont solidaires.

D'autre part, les sous-ensembles supérieur I et inférieur II comportent chacun deux languettes d'ouverture 12, respectivement 13 espacées l'une de l'autre et ayant chacune une racine sensiblement au niveau du bord libre du rebord 1 du récipient.

Dans ce mode de réalisation, les languettes 12 et 13 sont rendues adhérantes entre elles lors de l'application de l'outil de thermoscellage, l'une des languettes 13 étant en outre fragilisée le long d'une ligne 14 adjacente à sa racine. Par ailleurs, comme le montre la figure 4, la languette 12 qui est située au-dessus de la languette fragilisée 13 porte une indication précisant que l'utilisateur devra enlever ces languettes avant d'introduire le récipient dans un four à micro-ondes.

Lorsque l'utilisateur exercera une force de traction sur ces languettes, la languette fragilisée 13 se séparera aisément du sous-ensemble inférieur II le long de la ligne de fragilisation 14, mais restera solidaire du sous-ensemble supérieur I qui pourra ainsi être séparé du reste de l'opercule.

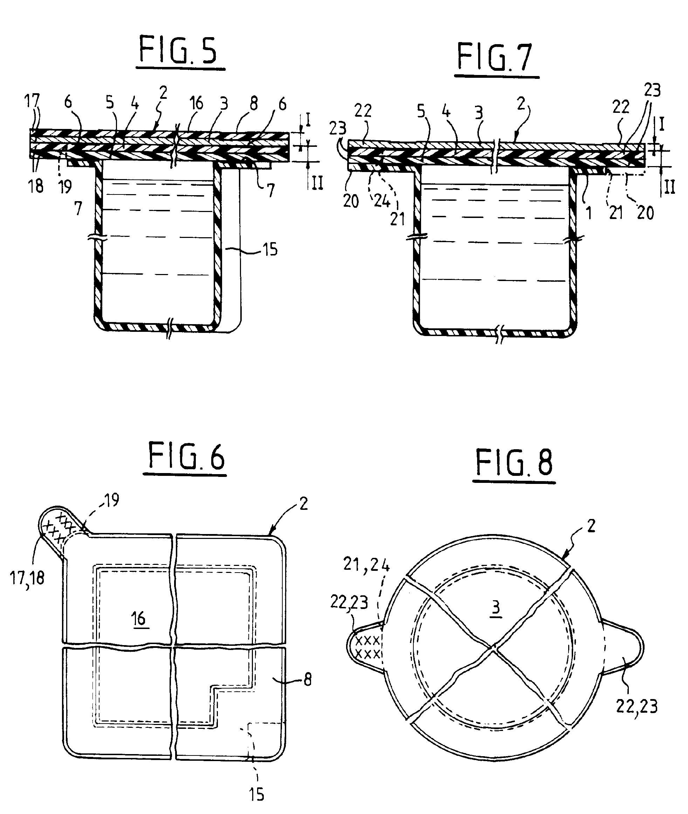

Dans le mode de réalisation représenté sur les figures 5 et 6, le récipient comprend un renfoncement latéral 15 au niveau de l'un de ses angles, la largeur de son rebord périphérique étant la même au niveau de son renfoncement latéral que dans ses autres parties.

D'autre part, le sous-ensemble supérieur I de l'opercule 2 comporte une couche supplémentaire de renforcement 16 fixée sur la face supérieure de la couche métallique 3.

Dans ce mode de réalisation, les sous-ensembles supérieur I et inférieur II s'avancent au-dessus du renfoncement latéral 15 de sorte que l'existence de celui-ci ne peut être décelée lorsque l'opercule est vu de dessus. Ils comportent deux languettes 17,18 éloignées du renfoncement latéral 15 et adhérant l'une avec l'autre, la languette 18 du sous-ensemble inférieur II étant fragilisée le long d'une ligne de fragilisation 19 adjacente à sa racine qui est sensiblement au niveau du bord libre du rebord 1 du récipient.

Par ailleurs, la languette 17 porte une indication précisant à l'utilisateur qu'il doit exercer une traction sur le couple de languettes 17,18 pour enlever le sous-ensemble supérieur I.

On notera ici que l'opercule ménage une sorte de languette à l'extérieur du renfoncement 15 et que l'utilisateur pourra utiliser cette sorte de languette pour ouvrir le récipient, après le réchauffage ou la cuisson du contenu de celui-ci dans un four à micro-ondes.

Dans le mode de réalisation représenté sur les figures 7 et 8, le rebord périphérique 1 du récipient présente une saillie externe 20 délimitée par une ligne de fragilisation 21.

Par ailleurs, les sous-ensembles supérieur I et inférieur II comportent chacun deux languettes d'ouverture 22, respectivement 23, espacées l'une de l'autre et ayant chacune une racine sensiblement au niveau du bord libre du rebord périphérique 1.

Les languettes 22 sont rendues adhérantes aux languettes 23 lors du thermoscellage. En outre, la saillie externe 20 est recouverte par deux des languettes 22,23 adhérant l'une avec l'autre, la languette 23 reposant sur la saillie externe étant fragilisée le long d'une ligne de fragilisation 24 adjacente à sa racine.

Une indication mentionnée sur la languette 22 située au niveau de la saillie 20 est par ailleurs prévue pour inviter l'utilisateur à exercer une traction sur l'ensemble formé par la saillie et les languettes correspondantes 22,23 avant d'introduire le récipient dans un four à micro-ondes.

Selon une variante de réalisation, le rebord périphérique 1 du récipient pourrait présenter une seconde saillie externe 20 délimitée par une ligne de fragilisation 21, comme représenté en traits mixtes sur la figure 7.

Dans ce cas, le second couple de languettes 22,23 reposerait alors sur cette seconde saillie externe.

On va maintenant mentionner les matériaux pouvant entrer dans la constitution des opercules 2 des récipients conformes à l'invention, et indiquer les épaisseurs des couches formant ces opercules.

Ainsi, la couche métallique 3 peut être une couche d'aluminium ou d'alliage d'aluminium, son épaisseur pouvant être de 10 à 200 »m.

La couche réactivable à chaud 4 peut être constituée par un matériau choisi dans le groupe comprenant un polypropylène greffé, un polyéthylène haute densité greffé, un polyéthylène basse densité linéaire greffé, un copolymère greffé éthylène-acétate de vinyle, un copolymère greffé éthylène-acrylate de butyle, ou un copolymère greffé éthylène-acrylate de méthyle, l'éléments de greffage étant un monomère insaturé comportant au moins un groupe acide carboxylique, tel que l'acide acrylique ou l'anhydride maléique. Son épaisseur peut être de 10 à 200 »m.

La couche thermoscellable 5 peut être constituée par un matériau choisi dans le groupe comprenant un vernis polyester ou une couche extrudable à base de polypropylène, de polyéthylène haute densité ou de polyester. Son épaisseur peut être de 5 à 100 »m.

La couche intermédiaire 11 est constituée par un matériau présentant une affinité avec la couche réactivable à chaud et avec la couche thermoscellable, son épaisseur pouvant être de 10 à 200 »m.

Quant à la couche de renforcement 16, elle peut être constituée par un matériau choisi dans le groupe comprenant un polyester ou un polypropylène et avoir une épaisseur de 10 à 200 »m.

On notera par ailleurs que le sous-ensemble inférieur II des opercules 2 pourrait comporter des perforations évitant la formation d'une surpression dans les récipients pendant le réchauffage ou la cuisson par micro-ondes des produits contenus dans ces derniers.

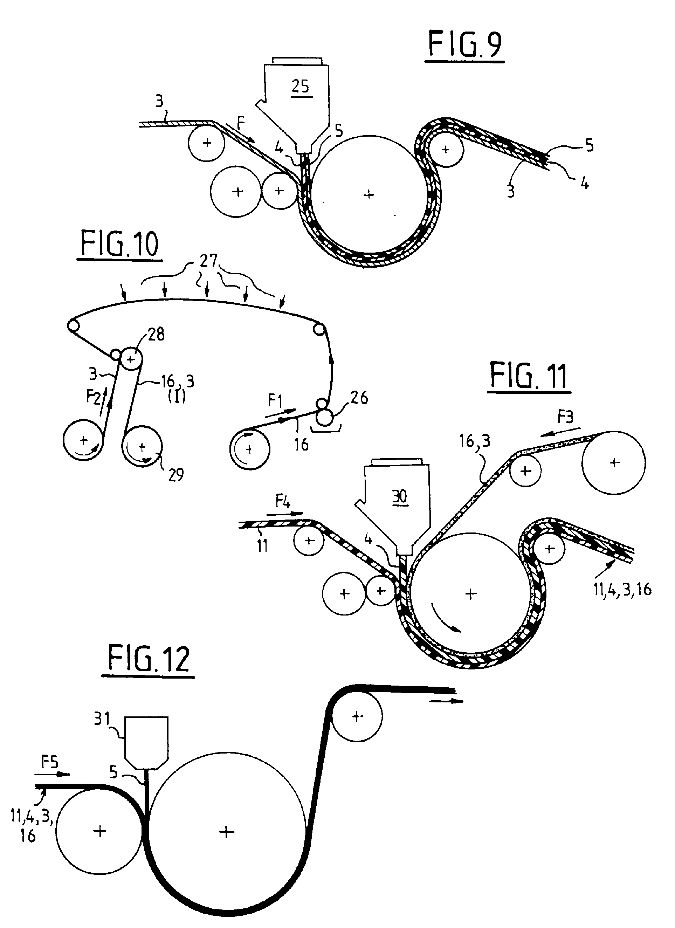

La figure 9 illustre un procédé de fabrication d'un stratifié en bande à partir duquel on pourra découper les opercules destinés à fermer les récipients visibles sur les figures 1 et 7.

Elle montre que ce stratifié peut être obtenu d'une manière connue en soi en coextrudant un matériau réactivable à chaud 4 et un matériau thermoscellable 5 sur une bande métallique 3 se déplaçant dans le sens de la flèche F, la coextrusion étant réalisée en continu à partir d'une filière 25.

Les figures 10 à 12 illustrent quant à elles un procédé de fabrication d'un stratifié en bande à partir duquel on pourra découper des opercules dont le sous-ensemble supérieur I comprend une couche métallique 3 et une couche de renforcement 16 et dont le sous-ensemble inférieur II comprend une couche intermédiaire 11 entre une couche réactivable à chaud 4 et une couche thermoscellable 5.

Plus précisément, la figure 10 illustre la première étape du procédé de fabrication, première étape au cours de laquelle un stratifié élémentaire en bande correspondant au sous-ensemble supérieur I est obtenu :
- en appliquant, au niveau d'un poste d'enduction 26, un film de colle sur une feuille de renforcement 16 entraînée en continu dans le sens de la flèche F₁ ;
- en faisant sécher, dans un poste de séchage 27, la colle déposée sur la feuille de renforcement 16 ;
- en appliquant, dans un poste de jonction 28, contre la face encollée de la feuille 16, une feuille métallique 3 entraînée dans le sens de la flèche F₂ en synchronisme avec ladite feuille 16 ; et
- en enroulant le stratifié élémentaire résultant sous la forme d'une bobine 29.

La figure 11 illustre la seconde étape du procédé de fabrication, seconde étape au cours de laquelle un second stratifié élémentaire en bande est obtenu en extrudant un matériau constituant la couche réactivable à chaud 4 entre le stratifié élémentaire obtenu à la première étape et une couche intermédiaire 11, le matériau 4 constituant la couche réactivable à chaud étant extrudé à partir d'une filière 30 pendant que le premier stratifié élémentaire et la couche 11 sont entraînés en synchronisme respectivement dans le sens des flèches F₃ et F₄.

La figure 12 illustre quant à elle la troisième étape du procédé de fabrication, troisième étape au cours de laquelle le stratifié final en bande est obtenu en extrudant un matériau constituant la couche thermoscellable 5 sur le second stratifié élémentaire obtenu à la seconde étape, le matériau constituant la couche 5 étant extrudé à partir d'une filière 31 pendant que le second stratifié élémentaire se déplace dans le sens de la flèche F₅.

## Revendications

1. Récipient pour produit à réchauffer ou à cuire dans un four tel qu'un four à micro-ondes, comportant un rebord périphérique (1) sur lequel un opercule (2) est fixé par thermoscellage, caractérisé en ce que l'opercule comprend un sous-ensemble supérieur (I) comportant une couche métallique (3) et un sous-ensemble inférieur (II) comportant une couche supérieure réactivable à chaud (4) apposée initialement de manière non adhérente contre la couche métallique (3) et une couche inférieure thermoscellable (5) scellée contre le rebord périphérique (1), la couche réactivable à chaud (4) et la couche thermoscellable (5) étant des couches en matière synthétique, en ce que la couche métallique (3) est séparable par pelage de la couche réactivable à chaud (4) tandis que la couche thermoscellable (5) est séparable par pelage du rebord périphérique (1), et en ce qu'une partie périphérique (6) de la couche réactivable à chaud (4), située à l'aplomb du rebord périphérique (1) adhère, par suite de sa réactivation due à son chauffage lors du scellage de la couche thermoscellable (5) sur le rebord périphérique (1), à la couche métallique (3).

2. Récipient selon la revendication 1, caractérisé en ce que la couche réactivable à chaud (4) présente vis à vis de la couche métallique (3) une adhérence inférieure à l'adhérence de la couche thermoscellable (5) vis à vis du rebord périphérique (1).

3. Récipient selon la revendication 1 ou 2, caractérisé en ce que la couche réactivable à chaud (4) et la couche thermoscellable (5) sont appliquées l'une contre l'autre de manière inséparable.

4. Récipient selon la revendication 1 ou 2, caractérisé en ce que la couche réactivable à chaud (4) et la couche thermoscellable (5) sont situées de part et d'autre d'au moins une couche intermédiaire (11) dont elles sont inséparables.

5. Récipient selon l'une quelconque des revendications 1 à 4, caractérisé en ce que les sous-ensembles supérieur (I) et inférieur (II) comportent chacun une languette d'ouverture (9,10) s'étendant au-delà du rebord périphérique (1), les deux languettes (9,10) étant superposées mais n'adhérant pas l'une avec l'autre.

6. Récipient selon l'une quelconque des revendications 1 à 4, caractérisé en ce que les sous-ensembles supérieur (I) et inférieur (II) comportent chacun deux languettes d'ouverture (12,13) ayant chacune une racine sensiblement au niveau du bord libre du rebord périphérique, les languettes (12) du sous-ensemble supérieur (I) adhérant aux languettes (13) du sous-ensemble inférieur (II) tandis que l'une de ces dernières est fragilisée au niveau de sa racine.

7. Récipient selon l'une quelconque des revendications 1 à 4, comprenant un renfoncement latéral (15), caractérisé en ce que les sous-ensembles supérieur (I) et inférieur (II) s'avancent au-dessus du renfoncement latéral (15) et comportent chacun une languette d'ouverture (17,18) ayant une racine sensiblement au niveau du bord libre du rebord périphérique (1), les deux languettes (17,18) étant distantes du renfoncement latéral (15) et adhérant l'une avec l'autre, la languette (18) du sous-ensemble inférieur (II) étant en outre fragilisée au niveau de sa racine.

8. Récipient selon l'une quelconque des revendications 1 à 4, dont le rebord périphérique (1) présente une saillie externe (20) délimitée par une ligne de fragilisation (21), caractérisé en ce que les sous-ensembles supérieur (I) et inférieur (II) comportent chacun deux languettes d'ouverture (22,23) ayant chacune une racine sensiblement au niveau du bord libre du rebord périphérique (1), en ce que les languettes (22) du sous-ensemble supérieur (I) adhérent aux languettes (23) du sous-ensemble inférieur (II), en ce que la saillie externe (20) est recouverte par deux des languettes (22,23) adhérant l'une à l'autre, et en ce que la languette (23) du sous-ensemble inférieur (II) reposant sur la saillie externe (20) est fragilisée au niveau de sa racine.

9. Récipient selon l'une quelconque des revendications 1 à 4, dont le rebord périphérique (1) présente deux saillies externes (20) délimitées chacune par une ligne de fragilisation (21), caractérisé en ce que les sous-ensembles supérieur (I) et inférieur (II) comportent chacun deux languettes d'ouverture (22,23) ayant chacune une racine sensiblement au niveau du bord libre du rebord périphérique (1), en ce que les languettes (23) du sous-ensemble inférieur (II) recouvrent les saillies externes (20) et adhérent aux languettes (22) du sous-ensemble supérieur (I), et en ce que l'une (23) des languettes du sous-ensemble inférieur (II) est fragilisée au niveau de sa racine.

10. Récipient selon l'une quelconque des revendications précédentes, caractérisé en ce que la couche métallique (3) est revêtue extérieurement d'au moins une couche de renforcement (16).

11. Récipient selon la revendication 10, caractérisé en ce que la couche de renforcement (16) est constituée par un matériau choisi dans le groupe comprenant un polyester ou un polypropylène.

12. Récipient selon l'une quelconque des revendications précédentes, caractérisé en ce que la couche métallique (3) est une couche d'aluminium ou d'alliage d'aluminium.

13. Récipient selon l'une quelconque des revendications précédentes, caractérisé en ce que la couche réactivable à chaud (4) est constituée par un matériau choisi dans le groupe comprenant un polypropylène greffé, un polyéthylène haute densité greffé, un polyéthylène basse densité linéaire greffé, un copolymère greffé éthylène-acétate de vinyle, un copolymère greffé éthylène-acrylate de butyle, ou un copolymère greffé éthylène-acrylate de méthyle, l'élément de greffage étant un monomère insaturé comportant au moins un groupe acide carboxylique.

14. Récipient selon l'une quelconque des revendications précédentes, caractérisé en ce que la couche thermoscellable (5) est constituée par un matériau choisi dans le groupe comprenant un vernis polyester ou une couche extrudable à base de polypropylène, de polyéthylène haute densité ou de polyester.

15. Récipient selon l'une quelconque des revendications précédentes, caractérisé en ce que la couche intermédiaire (11) est constituée par un matériau présentant une affinité avec la couche réactivable à chaud et avec la couche thermoscellable.

16. Récipient selon l'une quelconque des revendications précédentes, caractérisé en ce que la couche métallique (3) a une épaisseur de 10 à 200 »m.

17. Récipient selon l'une quelconque des revendications précédentes, caractérisé en ce que la couche réactivable à chaud (4) a une épaisseur de 10 à 80 »m.

18. Récipient selon l'une quelconque des revendications précédentes, caractérisé en ce que la couche thermoscellable (5) a une épaisseur de 5 à 100 »m.

19. Récipient selon la revendication 10 ou 11, caractérisé en ce que la couche de renforcement (16) a une épaisseur de 10 à 200 »m.

20. Récipient selon la revendication 4, caractérisé en ce que la couche intermédiaire (11) a une épaisseur de 10 à 200 »m.

21. Récipient selon l'une quelconque des revendications précédentes, caractérisé en ce que le sous-ensemble inférieur (II) comporte des perforations.

## Patentansprüche

1. Behälter zum Aufwärmen oder zum Kochen von Produkten in einem Ofen wie z.B. einem Mikrowellenherd, einen nach außen umgebogenen Umfangsrand (1) umfassend, auf dem eine Folienabdeckung befestigt ist mittels Heißsiegeln,
**dadurch gekennzeichnet,** daß die Folienabdeckung einen oberen Teilaufbau (I) aufweist, der eine Metallschicht (3) umfaßt und einen unteren Teilaufbau (II), der eine warmreaktivierbare obere Schicht (4) umfaßt, anfänglich nichthaftend auf die Metallschicht (3) aufgebracht, und eine heißsiegelbare untere Schicht (5), versiegelt mit dem nach außen umgebogenen Umfangsrand (1), wobei die warmreaktivierbare Schicht (4) und die heißsiegelbars Schicht (5) Schichten aus synthetischem Material sind, dadurch, daß die Metallschicht (3) durch Abziehen trennbar ist von der warmreaktivierbaren Schicht (4), während die heißsiegelbare Schicht (5) durch Abziehen trennbar ist von dem nach außen umgebogenen Rand (1), und dadurch, daß ein peripherer Teil (6) der warmreaktivierbaren Schicht (4), die sich senkrecht über dem nach außen umgebogenen Umfangsrand (1) befindet, infolge seiner Reaktivierung, hervorgerufen durch seine Erwärmung während des Heißsiegelns der heißsiegelbaren Schicht (5) auf dem nach außen umgebogenen Umfangsrand (1), an der Metallschicht (3) haftet.

2. Behälter nach Anspruch 1, dadurch gekennzeichnet, daß die warmreaktivierbare Schicht (4) gegenüber der Metallschicht (3) eine kleinere Haftung aufweist, als die Haftung der heißsiegelbaren Schicht (5) gegenüber dem nach außen umgebogenen Rand (1).

3. Behälter nach Anspruch 1 oder 2, dadurch gekennzeichnet, daß die warmreaktivierbare Schicht (4) und die heißsiegelbare Schicht (5) untrennbar aneinander befestigt sind.

4. Behälter nach Anspruch 1 oder 2, dadurch gekennzeichnet, daß die warmreaktivierbare Schicht (4) und die heißsiegelbare Schicht (5) sich beiderseits von wenigstens einer Zwischenschicht (11) befinden, mit der sie untrennbar verbunden sind.

5. Behälter nach einem der Ansprüche 1 bis 4, dadurch gekennzeichnet, daß der obere (I) und der untere (II) Teilaufbau jeweils eine Zunge zum Öffnen (9,10) umfassen, die über den nach außen umgebogenen Umfangsrand (1) vorstehen, wobei die beiden Zungen (9,10) übereinanderliegend sind, aber nicht aneinander haften.

6. Behälter nach einem der Ansprüche 1 bis 4, dadurch gekennzeichnet, daß der obere (I) und der untere (II) Teilaufbau jeweils zwei Zungen zum Öffnen (12,13) umfassen, von denen jede eine Wurzel im wesentlichen in Höhe des freien Rands des Umfangsrands aufweist, wobei die Zungen (12) des oberen Teilaufbaus (I) an den Zungen (13) des unteren Teilaufbaus (II) haften, während eine von diesen letzteren brüchig gemacht ist in Höhe ihrer Wurzel.

7. Behälter nach einem der Ansprüche 1 bis 4, eine seitliche Verstärkung (15) umfassend, dadurch gekennzeichnet, daß der obere (I) und der untere (II) Teilaufbau über die seitliche Verstärkung (15) vorstehen und jeder eine Öffnungszunge (17,18) umfaßt, mit einer Wurzel im wesentlichen in Höhe des freien Rands des Umfangsrands (1), wobei die beiden Zungen (17,18) von der seitlichen Verstärkung (15) beabstandet sind und aneinander haften, und die Zunge (18) des unteren Teilaufbaus (II) außerdem brüchig gemacht ist in Höhe ihrer Wurzel.

8. Behälter nach einem der Ansprüche 1 bis 4, dessen nach außen umgebogener Umfangsrand (1) einen Außenvorsprung (20) aufweist, begrenzt durch eine Brüchigkeitslinie (21), dadurch gekennzeichnet, daß der obere (I) und der untere (II) Teilaufbau jeweils zwei Öffnungszungen (22,23) umfassen, von denen jede eine Wurzel im wesentlichen in Höhe des freien Rands des nach außen umgebogenen Umfangrands (1) aufweist, dadurch daß die Zungen (22) des oberen Teilaufbaus (I) an den Zungen (23) des unteren Teilaufbaus (II) haften, dadurch daß der Außenvorsprung (20) bedeckt ist durch zwei der Zungen (22,23), aneinander haftend, und dadurch, daß die Zunge (23) des unteren Teilaufbaus (II), die auf dem Außenvorsprung (20) ruht, in Höhe ihrer Wurzel brüchig gemacht ist.

9. Behälter nach einem der Ansprüche 1 bis 4, dessen nach außen umgebogener Rand (1) zwei Außenvorsprünge (20) aufweist, jeder begrenzt durch eine Brüchigkeitslinie (21), dadurch gekennzeichnet, daß der obere (1) und der untere (II) Teilaufbau jeweils zwei Öffnungszungen (22,23) umfassen, von denen jede eine Wurzel im wesentlichen in Höhe des freien Rands des nach außen umgebogenen Umfangrands (1) aufweist, dadurch daß die Zungen (23) des unteren Teilaufbaus (II) die Außenvorsprünge (20) bedecken und an den Zungen (22) des oberen Teilaufbaus (I) haften, und dadurch, daß eine der Zungen (23) des unteren Teilaufbaus (II) in Höhe ihrer Wurzel brüchig gemacht ist.

10. Behälter nach einem der vorhergehenden Ansprüche, dadurch gekennzeichnet, daß die Metallschicht (3) außen durch wenigstens eine Verstärkungsschicht (16) verkleidet ist.

11. Behälter nach Anspruch 10, dadurch gekennzeichnet, daß die Verstärkungsschicht gebildet wird durch ein Material, das ausgewählt wird aus der Gruppe, die ein Polyester oder ein Polypropylen umfaßt.

12. Behälter nach einem der vorhergehenden Ansprüche, dadurch gekennzeichnet, daß die Metallschicht (3) eine Aluminiumoder Aluminiumlegierungsschicht ist.

13. Behälter nach einem der vorhergehenden Ansprüche, dadurch gekennzeichnet, daß die warmreaktivierbare Schicht (4) gebildet wird durch ein Material, ausgewählt aus der Gruppe, die Pfropfpolypropylen, Hochdruck-Pfropfpolyethylen, lineares Propf-PE weich, Vinylethylenacetat-Pfropfcopolymer, Butylethylenacrylat-Propfcopolymer oder Methylethylenacrylat-Pfropfcopolymer umfaßt, wobei das Propfelement ein ungesättigtes Monomer ist, das wenigstens eine Carboxylsäuregruppe enthält.

14. Behälter nach einem der vorhergehenden Ansprüche, dadurch gekennzeichnet, daß die heißsiegelbare Schicht (5) gebildet wird durch ein Material, ausgewählt aus der Gruppe, die einen Polyesterlack oder eine extrudierbare Schicht auf Polypropylen-, Hochdruckpolypropylen- oder Polyesterbasis umfaßt.

15. Behälter nach einem der vorhergehenden Ansprüche, dadurch gekennzeichnet, daß die Zwischenschicht (11) gebildet wird durch ein Material, das eine Affinität zu der warmreaktivierbaren Schicht und zu der heißsiegelbaren Schicht aufweist.

16. Behälter nach einem der vorhergehenden Ansprüche, dadurch gekennzeichnet, daß die Metallschicht (3) eine Dicke von 10 bis 200 »m hat.

17. Behälter nach einem der vorhergehenden Ansprüche, dadurch gekennzeichnet, daß die warmreaktivierbare Schicht (4) eine Dicke von 10 bis 80 »m hat.

18. Behälter nach einem der vorhergehenden Ansprüche, dadurch gekennzeichnet, daß die heißsiegelbare Schicht (5) eine Dicke von 5 bis 100 »m hat.

19. Behälter nach Anspruch 10 oder 11, dadurch gekennzeichnet, daß die Verstärkungsschicht (16) eine Dicke von 10 bis 200 »m hat.

20. Behälter nach Anspruch 4, dadurch gekennzeichnet, daß die Zwischenschicht (11) eine Dicke von 10 bis 200 »m hat.

21. Behälter nach einem der vorhergehenden Ansprüche, dadurch gekennzeichnet, daß der untere Teilaufbau (II) Perforationen aufweist.

## Claims

1. A container for a product to be heated or cooked in an oven, such as a microwave oven, comprising a peripheral flange (1) on which a lid (2) is heat sealed, characterized in that the lid comprises an upper sub-assembly (I) having a metal layer (3) and a lower sub-assembly (II) having a heat reactivatable upper layer (4) initially affixed to the metal layer (3) in a non-adhering manner and a heat sealing lower layer (5) sealed to the peripheral flange (1), the heat reactivatable layer (4) and the heat sealing layer (5) being synthetic material layers, in that the metal layer (3) is separable by peeling from the heat reactivatable layer (4), while the heat sealing layer (5) is separable by peeling from the peripheral flange (1), and in that a peripheral portion (6) of the heat reactivatable layer (4) located straight above the peripheral flange (1) adheres to the metal layer (3) as a result of being reactivated by heating on sealing of the heat sealing layer (5) on the peripheral flange (1).

2. The container according to claim 1, characterized in that the heat reactivatable layer (4) has with respect to the metal layer (3) an adhesion which is less than the adhesion of the heat sealing layer (5) with respect to the peripheral flange (1).

3. The container according to claim 1 or 2, characterized in that the heat reactivatable layer (4) and the heat sealing layer (5) are inseparably secured to each other.

4. The container according to claim 1 or 2, characterized in that the heat reactivatable layer (4) and the heat sealing layer (5) are located on each side of at least one intermediate layer (11) and are inseparable therefrom.

5. The container according to any of claims 1 to 4, characterized in that the upper and lower sub-assemblies (I, II) each have one opening tongue (9, 10) extending beyond the peripheral flange (1), the two tongues (9, 10) being superimposed upon but not adhering to each other.

6. The container according to any of claims 1 to 4, characterized in that the upper and lower sub-assemblies (I, II) each have two opening tongues (12, 13) each having a root substantially coincidential with the free edge of the peripheral flange, the tongues (12) of the upper sub-assembly (I) adhering to the tongues (13) of the lower-assembly (II), with one of the tongues of the lower subassembly being weakened at its root.

7. The container according to any of claims 1 to 4 including a lateral indentation (15), characterized in that the upper and lower sub-assemblies (I, II) project out over said lateral indentation (15) and each have an opening tongue (17, 18) having a root substantially coincidential with the free edge of the peripheral flange (1), the two tongues (17, 18) being remote from said lateral indentation (15) and adhering together, the tongue (18) of the lower sub-assembly (II) being further weakened at its root.

8. The container according to any of claims 1 to 4, the peripheral flange (1) of which has an external projection (20) delimited by a weak line (21), characterized in that the upper and lower sub-assemblies (I, II) each have two opening tongues (22, 23), with each tongue having a root substantially coincidential with the free edge of the peripheral flange (1), in that the tongues (22) of the upper sub-assembly (I) adheres to the tongues (23) of the lower subassembly (II) in that the external projection (20) is covered by two of the tongues (22,23) adhering together, and in that the tongue (23) of the lower sub-assembly (II) resting on the external projection (20) is weakened at its root.

9. The container according to any of claims 1 to 4, the peripheral flange (1) of which has two external projections (20) each delimited by a weak line (21), characterized in that the upper and lower sub-assemblies (I, II) each have two opening tongues (22, 23), with each tongue having a root substantially coincidential with the free edge of the peripheral flange (1), in that the tongues (23) of the lower sub-assembly (II) cover the external projections (20) and adhere to the tongues (22) of the upper sub-assembly (I) and in that one (23) of the tongues of the lower sub-assembly (II) is weakened at its root.

10. The container according to any of claims 1 to 4, characterized in that the metal layer (3) is coated externally with at least one reinforcement layer (16).

11. The container according to claim 10, characterized in that the reinforcement layer (16) is formed from a material selected from the group comprising a polyester or a polypropylene.

12. The container according to any of the preceding claims, characterized in that the metal layer (3) is an aluminum or an aluminum alloy layer.

13. The container according to any of the preceding claims, characterized in that the heat reactivatable layer (4) is formed from a material selected from the group consisting of a grafted polypropylene, a grafted high density polyethylene, a grafted linear low density polyethylene, a grafted ethylene-vinyl acetate copolymer, a grafted ethylene-butyl acrylate copolymer, or a grafted ethylenemethyl acrylate copolymer, the grafting element being an unsaturated monomer comprising at least one carboxylic acid group.

14. The container according to any of the preceding claims, characterized in that the heat sealing layer (5) is formed from a material selected from the group consisting of a polyester furnish of a polypropylene, high density polyethylene or a polyester base extrudable layer.

15. The container according to any of the preceding claims, characterized in that the intermediate layer (11) is formed from a material having an affinity with the heat reactivatable layer and with the heat sealing layer.

16. The container according to any of the preceding claims, characterized in that the metal layer (3) has a thickness of from 10 to 200 »m.

17. The container according to any of the preceding claims, characterized in that the heat reactivatable layer (4) has a thickness of from 10 to 80 »m.

18. The container according to any of the preceding claims, characterized in that the heat sealing layer (5) has a thickness of from 5 to 100 »m.

19. The container according to claim 10 or 11, characterized in that the reinforcement layer (16) has a thickness of from 10 to 200 »m.

20. The container according to claim 4, characterized in that the intermediate layer (11) has a thickness of from 10 to 200 »m.

21. The container according to any of the preceding claims, characterized in that the lower sub-assembly (II) contains perforations.
